# EUROPEAN PATENT APPLICATION

(11) **EP 4 625 311 A1**
(43) Date of publication of application: **01.10.2025**
(21) Application number: 23893759.3
(22) Date of filing: 20.11.2023
(51) Int. Cl.: G06T 7/00, G06T 7/70

(54) **METHOD FOR DETECTING MATERIAL PLACEMENT CONDITION IN PACKAGING CASE**

(30) Priority: 21.11.2022 CN 202211469753
(71) Applicant: Leadway (HK) Limited, Sheung Wan, Hong Kong (CN)
(72) Inventor: QU, Shixiong, Hangzhou, Zhejiang 310030 (CN); JIANG, Jianjun, Hangzhou, Zhejiang 310030 (CN)
(74) Representative: Schiweck Weinzierl Koch Patentanwälte Partnerschaft mbB
(86) International application number: PCT/CN2023/132500
(87) International publication number: WO 2024/109669

(57) **Abstract**

The present invention provides a method for detecting the material placement condition in a packaging box, including an original image acquisition step, an image reduction step, an image enlargement step, an image processing step and a confirmation step, etc. By reducing and enlarging the original image, it can quickly determine the placement condition of the relevant materials in the packaging box, realize the high degree of automation of the packaging production line, and eliminate missed inspection due to manual visual inspection..

## Description

### TECHNICAL FIELD

The present invention relates to the field of product packaging technology, and more specifically, to a method for detecting the material placement condition inside a packaging box.

### BACKGROUND

In an automated packaging production line for products, currently, it mainly relies on manual visual inspection to check whether a packaging box on a conveyor belt contains relevant materials. For example, in an automated packaging production line for single-use antigen test products, a swab and a certificate of compliance must be placed in each packaging box. Due to the high output of the production line, prolonged reliance on manual visual inspection leads to eye fatigue, thus resulting in missed inspections and product quality defects. A weighing step is included in the packaging production line to measure the weight of the packaged products in order to ensure all materials have been placed inside, however, both the swab and the certificate are lightweight and this weighing step cannot determine whether the swab and the certificate have been placed into each packaging box.

To enhance automation of the packaging production line, some apparatuses having a machine vision system to determine the material placement condition inside a packaging box have emerged in the market. However, existing apparatuses in the market require two separate machine vision systems or a single industrial personal computer with two cameras, in order to determine whether the swab and the certificate are present. The first machine vision system is placed after a card dispenser (certificate feeding box) to determine the presence or absence of a certificate through template matching according to the specific pattern characteristics of the front side of a certificate (e.g., in an image, determining the presence or absence of a circle on a certificate). The second machine vision system is placed after a swab feeder box to determine whether a swab is present, either by detecting whether there is a strong reflection in each packaging box (at this time, the back side of a swab is placed face up, so the swab can be seen), or by template matching (at this time, the front side of a swab is placed face up, and it can be determined according to the specific image characteristics of the front side of a swab, such as a rectangular black mark at a corner).

However, when the two machine vision systems are used, hardware costs significantly increase, the apparatus occupies a large area, and a packaging production line is only suitable for a separate certificate or swab, so if there is a significant change in the outer packaging of the certificate or swab (such as the diameter of the circle on a certificate varies greatly), then it is necessary to create a new template to adapt to the new pattern characteristics, which leads to higher production costs and lower production efficiency.

### SUMMARY

To overcome the shortcomings of the prior art, the present invention provides a packaging method with simple design, low cost and high product adaptability.

The present invention provides a method for detecting the material placement condition in a packaging box, comprising the following steps:
1) original image acquisition step: obtain a grayscale image of a material placement region inside the packaging box, select a target area to be analyzed, and obtain a grayscale image of the target area as an original image A;
2) image reduction step: reduce the original image A in step 1) proportionally to obtain image B;
3) image enlargement step: enlarge the image B in step 2) to the size of the original image A, and obtain image C of the same size as the original image A;
4) image processing step: subtract image C from the original image A to obtain image D, then multiply the image D by a corresponding coefficient or multiply image D by a corresponding coefficient plus a certain value to obtain image E;
5) confirmation step: calculate the variance of grayscale values of the target area based on the image E to get a variance value Z; if the variance value Z is within the set interval range, judge that one or more materials in the packaging box comply with the packaging requirements; if the variance value Z is not within the set interval range, judge that said one or more materials in the packaging box do not comply with the packaging requirements.

Further, step 1) also includes a step of binarization of the original image A, comparing the binarized image with a threshold value, and if the grayscale value of the binarized image is less than the threshold value, judging that there is no highlighted area in the original image A, and proceeding to step 2); if a grayscale value of a portion of the binarized image is greater than the threshold value, there exists a highlighted area, and it is necessary to binarize the original image A to obtain the highlighted area F, then the area F is expanded to obtain an area F+, and a value is assigned to F+.

Further, one of the following processing methods is selected for assigning a value to the area F+: assigning a fixed grayscale value to the pixels in the area F+ of the image E in step 1), and taking the image as the original image A to enter step 2), or assigning a fixed grayscale value to the pixels in the area F+ of the image E in step 4), and then entering step 5).

Further, said value assigned to the area F+ is 0 or a low brightness value.

Further, in step 4), the image D is multiplied by a corresponding coefficient or the image D is multiplied by a corresponding coefficient plus a certain value, and if the grayscale value of the pixels in the image D exceeds 255 after the calculation, the grayscale value of the pixels is taken to be 255.

Further, the corresponding coefficient described in step 4) is a value greater than 0, and said certain value is a positive or negative number.

The present invention also provides a packaging method, comprising providing a packaging apparatus, said packaging apparatus comprising a switching power supply, a vision controller, a rejection device, a conveyor belt for transmitting a packaging box, and a camera located above the conveyor belt, the vision controller being electrically connected to the camera to receive an image of the interior of the packaging box captured by the camera, and the vision controller determining whether one or more materials inside the packaging box comply with the packaging requirements, and if the vision controller determines that said one or more materials inside the packaging box don't comply with the packaging requirements, the vision controller outputs a signal and the rejection device starts to reject the unqualified packaging box from the conveyor belt, and said step of determining whether said one or more materials inside the box comply with the packaging requirements includes:
1) original image acquisition step: use the camera on the packaging apparatus to obtain a grayscale image of a material placement region inside the packaging box on the conveyor belt, select a target area to be analyzed, and obtain a grayscale image of the target area as the original image A;
2) image reduction step: reduce the original image A in step 1) proportionally to obtain image B;
3) image enlargement step: enlarge the image B in step 2) to the size of the original image A, and obtain the image C of the same size as the original image A;
4) image processing step: subtract image C from the original image A to obtain image **D,** then multiply the image D by a corresponding coefficient or multiply image D by a corresponding coefficient plus a certain value to obtain image E;
5) confirmation step: calculating the variance of grayscale values of the target area based on the image E to obtain a variance value Z; if the variance value Z is within a set interval range, judge that said one or more materials in the packaging box comply with the packaging requirements; if the variance value Z is not within the set interval range, judge that said one or more materials in the packaging box do not comply with the packaging requirements.

Further, said packaging apparatus further comprises a trigger sensor for sensing the entry of the packaging box into a shooting area of the camera, said trigger sensor being electrically connected to the camera.

Further, the trigger sensor is a photoelectric switch.

Further, the packaging apparatus further comprises a packaging box rejection opening.

Further, step 1) also includes a step of binarization of the original image A, comparing the binarized image with a threshold value, and if the grayscale value of the binarized image is less than the threshold value, judging that there is no highlighted area in the original image A, and proceeding to step 2); if a grayscale value of a portion of the binarized image is greater than the threshold value, there exists a highlighted area, and it is necessary to binarize the original image A to obtain the highlighted area F, then the area F is expanded to obtain an area F+. One of the following processing methods is selected for assigning a value to the area F+: assigning a fixed grayscale value to the pixels in the area F+ of the image E in step 1), and taking the image as the original image A to enter step 2), or assigning a fixed grayscale value to the pixels in the area F+ of the image E in step 4), and then entering step 5). In the case where there is a large highlighted area, assigning a fixed grayscale value to the pixels in the area F+ can be performed in only one of the processing methods or both of the processing methods.

Further, the corresponding coefficient in step 4) is a value greater than 0, and said certain value is a positive or negative number.

The advantages of the present invention over the prior art are that the present invention is able to replace manual work by design optimization; the hardware apparatus is equipped with only one machine vision system, the costs are further reduced, and the space occupied by the apparatus is greatly reduced, which helps to set up more packaging production lines; in this invention, an operator can change related parameters in real time according to new materials, to adapt to new products, so small local pattern changes do not affect the operation of the vision system, thus achieving high compatibility.

### BRIEF DESCRIPTION OF THE DRAWINGS

FIG 1 shows an image of a packaging box without one or more materials stored inside.
FIG 2 shows an image of a packaging box with a certificate, wherein the front side of the certificate is placed face up.
FIG 3 shows an image of a packaging box with a swab and a certificate placed inside, wherein the paper side of the swab is placed face up.
Figure 4 shows an image of a packaging box with a certificate, wherein the front side of the certificate is placed face down.
FIG 5 is an image of a packaging box with a swab, wherein the plastic side of the swab is placed face up.
FIG 6 is a flow diagram of for determining the material placement condition inside a packaging box in the present invention.
FIG 7 shows a schematic diagram of an apparatus configuration circuit of the present invention.
FIG 8 shows a schematic diagram of a packaging apparatus of the present invention.
FIG 9 shows a schematic diagram of another angle of a packaging apparatus of the present invention.

### DETAILED DESCRIPTION OF EMBODIMENTS

The packaging method of the present invention is described in detail below in connection with the accompanying drawings and specific embodiments.

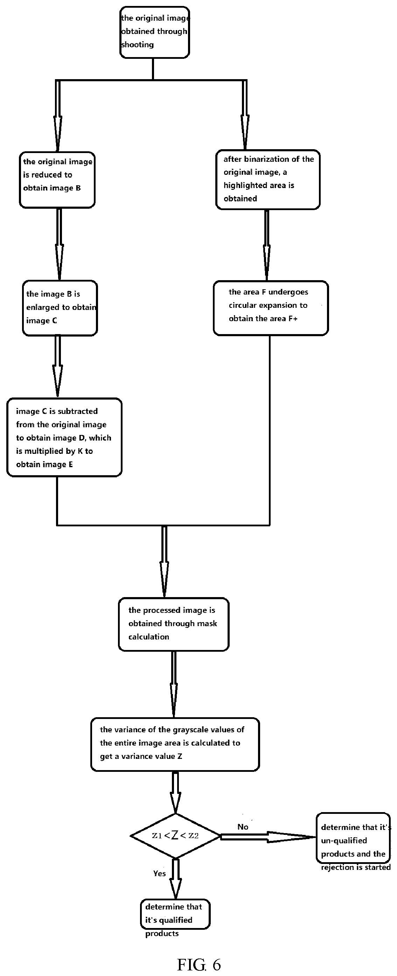

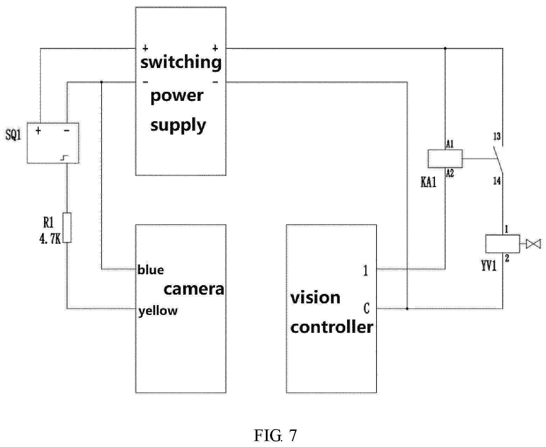

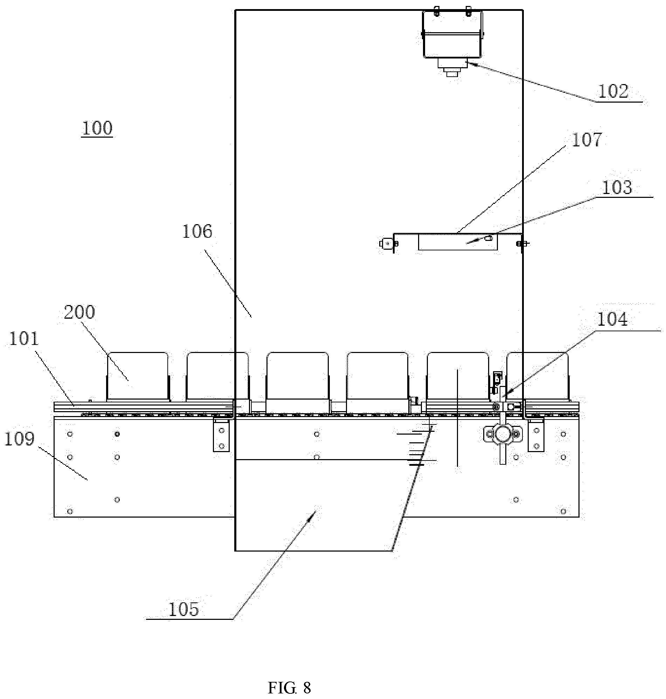

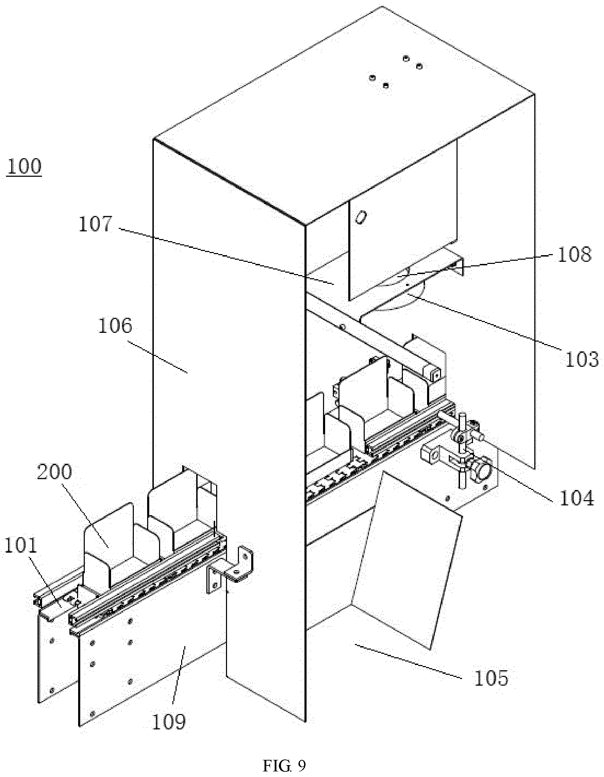

As shown in FIGS. 7, 8 and 9, a packaging apparatus 100 includes a switching power supply for the apparatus, a conveyor belt 101 for transmitting packaging boxes, the packaging boxes 200 are spaced apart from each other by a certain distance and placed sequentially on the conveyor belt 101, and a camera 102 and a camera light source 103 are mounted on a bracket 106, respectively. The camera 102 and the camera light source 103 are mounted directly above the conveyor belt 101, and the camera light source 103 is located between the camera and the conveyor belt 101. The camera 102 is mounted directly on the bracket 106, and the camera light source 103 is connected to the bracket 106 via a light source bracket 107. The camera light source 103 adopts a circular lamp, and a shooting through-hole 108 is provided in the light source bracket 107, and the camera 102 aims at the interior of a packaging box for shooting through the shooting through-hole 108 and the central area of the circular lamp. A trigger sensor 104 is mounted on the mounting bracket 109 of the conveyor belt 101, and when a packaging box is conveyed to the trigger sensor, the trigger sensor 104 (SQ1 in FIG 7) senses that the packaging box has entered the shooting area of the camera to produce a trigger signal, and the trigger signal (a photoelectric switch as the trigger sensor may be set as a rising-edge trigger, a falling-edge trigger, a switch-on trigger, and so on) directly triggers the camera to take an image through a circuit, and a vision controller receives an internal image of the packaging box captured by the camera in the timed scanning. The vision controller according to the method shown in the flow diagram of determining the material placement condition inside a packaging box in Fig. 6, to determine whether the material placement condition inside the packaging box complies with the packaging requirements: if the material placement condition inside the packaging box complies with the packaging requirements, the qualified packaging box continues to move along the conveyor belt, if the material placement condition inside the packaging box doesn't comply with the packaging requirements, for example, the packaging box lacks one or more materials, or said one or more materials are placed in the opposite direction, etc., then the output point (shown in '1' of the vision controller in Fig. 7) of the vision controller has an output, thereby connecting a coil of intermediate relay KA1, and the normally open contact of KA1 closes, the rejection solenoid valve YV1 conducts, and the rejection device of the packaging apparatus pushes the unqualified packaging box into a packaging box rejection opening 105. The rejection device and the packaging box rejection opening are located downstream of the trigger sensor.

The mounting position of the camera light source may also be mounted at other location of the packaging apparatus; or the camera light source may not be mounted if the required brightness for taking an image is ensured; or the camera light source may be mounted directly on the camera.

The mounting location of the trigger sensor may also be mounted at other location of the packaging apparatus, and other element may be used to determine that a packaging box has entered the shooting area. The trigger sensor can also not be installed, and the camera continuously takes images, and when the vision controller determines that the material placement condition is not in accordance with the packaging requirements, the rejection device is activated, and the unqualified packaging box is rejected.

The rejection device adopts a rejection solenoid valve, when the rejection is activated, the air pipe of the rejection device is connected, and the unqualified packaging box is blown out of the conveyor belt by means of air jet. The rejection device may also be operated in other ways.

The following combines with FIG 6 to specify two packaging methods for determining whether one or more materials inside a packaging box comply with the packaging requirements.

### Method I

The following is a packaging method of the present invention for determining whether the material placement condition in a packaging box complies with the packaging requirements, specifically comprising the following steps:
1) original image acquisition step: obtain a grayscale image of a material placement region inside the packaging box, select a target area to be analyzed, and obtain a grayscale image of the target area as an original image A. Said target area may refer to the entire area of the grayscale image of the material placement region inside the packaging box or a certain portion thereof.
2) image reduction step: reduce the original image A proportionally to obtain a reduced image B.
3) image enlargement step: enlarge the image B to the size of the original image A, and obtain image C of the same size as the original image A.
4) image processing step: subtract image C from the original image A to obtain image D, then multiply the image D by a corresponding coefficient or multiply image D by a corresponding coefficient plus a certain value to obtain image E. The corresponding coefficient is a value greater than 0, and the certain value can be a positive number or a negative number. The corresponding coefficient and the certain value can be determined according to tests.
5) confirmation step: calculate the variance of grayscale values of the target area based on image E to get a variance value Z; if the variance value Z is within the set interval range, judge that the materials in the packaging box comply with the packaging requirements, thus determining the packaging box is qualified; if the variance value Z is not within the set interval range, judge that one or more materials in the packaging box do not comply with the packaging requirements, thus determining the packaging box is non-qualified.

### Method II

The following is a packaging method of the present invention for determining whether the material placement condition in a packaging box complies with the packaging requirements, and the method is suitable for processing images with highlighted areas and the difference from Method I is that after obtaining the original image A, it is necessary to determine whether there is a highlighted area and the highlighted area is processed (if exists). Specifically, the packaging method comprises the following steps:
1) original image acquisition step: obtain a grayscale image of a material placement region inside the packaging box, select a target area to be analyzed, and obtain a grayscale image of the target area as an original image A. Said target area may refer to the entire area of the grayscale image of the material placement region inside the packaging box or a certain portion thereof.
2) a step for judging and processing a highlighted area: the original image A is binarized, then the grayscale value of the binarized original image is compared with a threshold value, if the grayscale value of the binarized original image A is less than the threshold value, the original image is judged not to have a highlighted area; if a grayscale value of a portion of the binarized original image A is greater than the threshold value, then the portion is a highlighted area F, the original image A needs to be binarized to obtain the highlighted area F, F is expanded to get an area F+.
3) image reduction step: if it is determined in step 2) that the original image A has not a highlighted area, then the original image A is proportionally reduced to obtain the reduced image B; if it is determined in step 2) that there is a highlight area in the original image A, the image obtained after the expansion of the highlight area is proportionally reduced to obtain the reduced image B.
4) image enlargement step: enlarge the image B to the size of the original image A, and obtain image C of the same size as the original image A.
5) image processing step: subtract image C from the original image A to obtain image D, then multiply the image D by a corresponding coefficient or multiply image D by a corresponding coefficient plus a certain value to obtain image E. The corresponding coefficient is a value greater than 0, and the certain value can be a positive number or a negative number. The corresponding coefficient and the certain value can be determined according to tests.
6) confirmation step: calculate the variance of grayscale values of the target area based on the image E to get a variance value Z; if the variance value Z is within the set interval range, judge that one or more materials in the packaging box comply with the packaging requirements, thus determining the packaging box is qualified; if the variance value Z is not within the set interval range, judge that said one or more materials in the packaging box do not comply with the packaging requirements, thus determining the packaging box is non-qualified.

The method II also includes a step of assigning a value to the area F+. The step of assigning a value may be carried out in step 2), i.e., the highlighted area F is expanded to obtain an area F+, and the grayscale value of the area F+ of the original image A is assigned to a value of 0 or a low brightness value. The assignment step may also be performed in step 5), i.e., the grayscale value of the area F+ in image E is assigned to 0 or a low brightness value.

### Embodiment 1: Comparison of the variance of grayscale values of different packaging methods

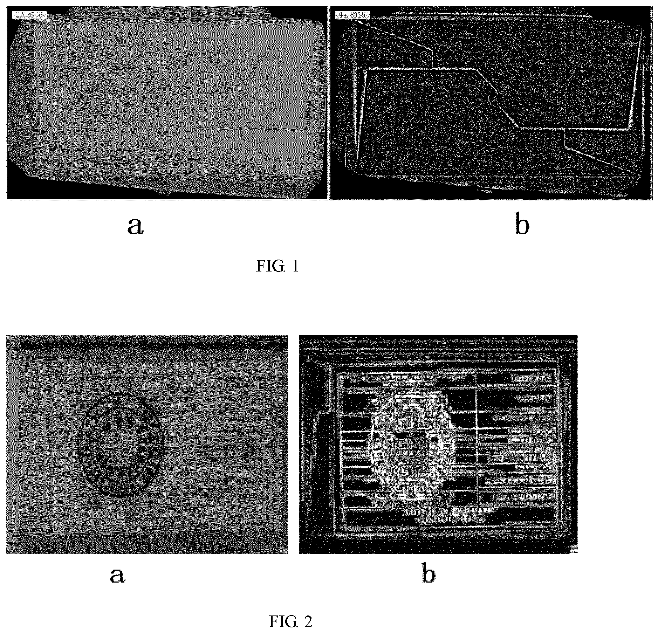

FIG 1 is an image of a packaging box without two materials, a swab and a certificate, wherein FIG 1(a) is a grayscale image obtained directly after photographing a material placement region in the packaging box without being processed by the packaging methods of the present invention, with a variance of the grayscale values of 22.3106, and FIG 1(b) is an image taken after processing with the Method I of the present invention, with a variance of the grayscale values of 44.8119.

FIG 2 is an image of a packaging box with a certificate placed inside it, wherein FIG 2(a) is a grayscale image obtained directly after photographing a material placement region inside the packaging box without being processed by the packaging methods of the present invention, with a variance of the grayscale values of 31.3447, and FIG 2(b) is an image taken after processing with the Method I of the present invention, with a variance of the grayscale values of 87.2330.

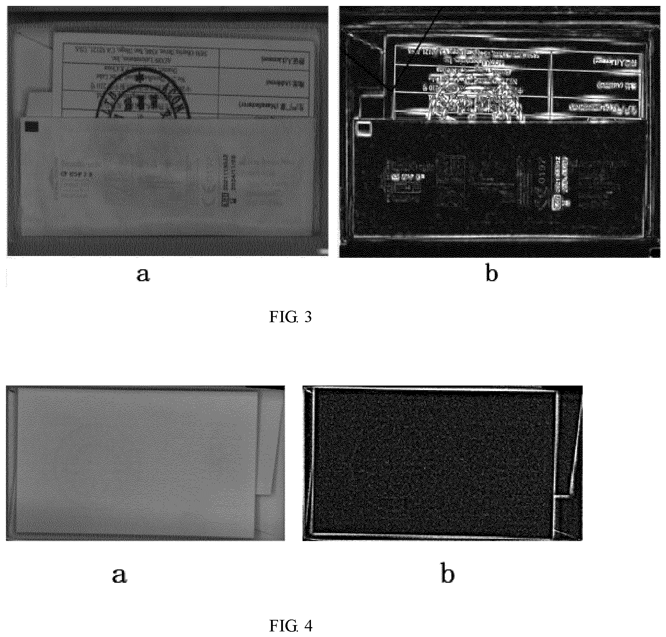

FIG 3 is an image of a packaging box with a swab and a certificate placed inside it, wherein FIG 3(a) is a grayscale image obtained directly after photographing a material placement region in the packaging box without being processed by the packaging methods of the present invention, with a variance of the grayscale values of 35.8878, and FIG 3(b) is an image taken after processing with the Method II of the present invention, with a variance of the grayscale values of 63.4496.

From the analysis results of the grayscale images obtained directly after photographing a material placement region in the packaging box without being processed by the packaging methods of the present invention, the difference between the variance of the grayscale values of the image of the packaging box with only a certificate placed inside and the variance of the grayscale values of the image of the packaging box without a certificate placed inside is only 9.0341 (31.3447-22.3106), and the difference between the variance of the grayscale values of the image of the packaging box with a swab and a certificate placed inside and the variance of the grayscale values of the image of the packaging box with only a certificate placed inside is only 4.5431 (35.8878-31.3447). The difference between the variance of the grayscale values in these three cases is so small that an analysis software cannot analyze whether one or more relevant materials, such as a certificate, a swab etc., have been placed inside the packaging box by the variance value, or the slight fluctuation of the variance may be caused by the image measurement bias, and if the difference between the variance of the grayscale values is so small that the packaging apparatus cannot determine that the difference is due to the measurement bias or the correct materials not placed inside the packaging box.

From the analysis results of the images taken after processing by the packaging methods of the present invention, the difference between the variance of the grayscale values of the image of the packaging box with only a certificate placed inside and the variance of the grayscale values of the image of the packaging box without a certificate placed inside is 42.4211(87.2330-44.8119), and the difference between the variance of the grayscale values of the image of the packaging box with a swab and a certificate placed inside and the variance of the grayscale values of the image of the packaging box with only a certificate placed inside is 23.7834 (87.2330-63.4496). The difference between the variance of the grayscale values in these three cases is so big that the measurement bias of the images doesn't have a large effect on the variance of the grayscale values of the images, and thus the packaging apparatus can accurately determine whether the correct materials have been placed in the packaging box.

Therefore, the packaging methods of the present invention can effectively and accurately determine whether the correct materials have been placed in the packaging box.

### Embodiment 2: Determining whether the placing direction of one or more material inside a packaging box is correct

In Fig. 2, the front side of a certificate is placed face up inside a packaging box, and in Fig. 4, the front side of a certificate is placed face down in a packaging box. The front side of a certificate refers to a side with words of the certificate, and the back side of the certificate refers to a side without words of the certificate. After the placement is completed, a grayscale image of the inside of the packaging box is obtained, such as an image in FIG 2(a) and an image in FIG 4(a). Then image processing is performed on the image in FIG 2(a) and the image in FIG 4(a) separately using the Method I of the present invention, and the variance of the grayscale image in FIG 2(b) is obtained to be 87.2330, and the variance of the grayscale image in FIG 4(b) is obtained to be 42.325. In this embodiment, it is set that, when the front side of the certificate faces upward, a variance of a grayscale image, Z, is greater than a set value of 66. The variance of the grayscale image in FIG 2(b) is 87.2330, which is greater than the set value of 66, so the packaging apparatus determines that the product certificate in the packaging box is placed face up and is correctly placed; the variance of the grayscale image in FIG 4(b) is 42.325, which is less than the set value of 66, so the packaging apparatus determines that the product certificate in the packaging box is placed face down and is incorrectly placed, and it needs to be rejected from the packaging production line.

### Embodiment 3: Determining whether there is one or more materials inside a packaging box

As in FIG 1, no material is placed in a packaging box, i.e., no product certificate is placed, and as in FIG 2, a material is placed in a packaging box, i.e., the product certificate is placed. After the placement is completed, a grayscale image of the packaging box is obtained, such as the image in Fig. 1(a) and the image in Fig. 2(a). Then the Method I of the present invention is used to perform image processing for the image in Fig. 1(a) and the image in Fig. 2(a) respectively, and the variance of the grayscale image in FIG 1(b) is obtained to be 44.8119, and the variance of the grayscale image in FIG 2(b) is obtained to be 87.2330. It is set in this embodiment that, when a certificate faces upward, a variance of a grayscale image, Z, should be greater than a set value of 60. The variance of the grayscale image in FIG 1(b) is 44.8119, which is less than a set value of 60, so the packaging apparatus determines that no material has been put inside the packaging box, and the packaging box is an empty box and needs to be rejected from the packaging production line. The variance of the grayscale image in FIG 2(b) is 87.2330, which is greater than a set value of 60, so the packaging apparatus determines that one or more materials have been put inside the packaging box, and are correctly placed.

### Embodiment 4: Determining whether the number and type of one or more materials in a packaging box are correct

FIG 1 shows a packaging box without a material placed inside, i.e., there is no certificate placed inside, and FIG 2 shows a packaging box with a single material placed inside, i.e., there is a certificate placed inside. FIG 3 shows a packaging box with two materials placed inside, that is, a certificate and a swab are placed inside. After the placement is completed, a grayscale image of the inside of the packaging box is obtained, such as the image in FIG 1(a), the image in FIG 2(a), and the image in FIG 3(a). These images are then processed separately using the Method I of the present invention, and the variance of the grayscale image in FIG 1(b) is obtained to be 44.8119, the variance of the grayscale image in FIG 2(b) is obtained to be 87.2330, and the variance of the grayscale image in FIG 3(b) is obtained to be 63.4496. The present embodiment is set so that when a variance, Z, is within 49<Z<73, it is determined that the two materials are placed inside a packaging box.

The method of processing any of the image in FIG 1(a), the image in FIG 2(a), and the image in FIG 3(a) in this embodiment specifically includes:
1) original image acquisition step: obtain a grayscale image of a material placement region inside the packaging box, such as the image in FIG 1(a) or the image in FIG 2(a), select the entire area of the image as a target area to be analyzed, and obtain a grayscale image of the entire area as the original image A.
2) image reduction step: reduce the original image A proportionally to obtain a reduced image B. That is, the original image A is reduced to one-tenth of the width and one-tenth of the height of the original image A to get the smaller-sized grayscale image B. In this embodiment, the original image A is 1020*500 pixels, and the image B is 102*50 pixels.
3) image enlargement step: enlarge the image B to the size of the original image A, and obtain image C of the same size as the original image A. That is, the image B is enlarged to the size of the original image A to obtain image C of the same size as the original image A. In this embodiment, the original image A is 1020*500 pixels, and image C is also 1020*500 pixels.
4) image processing step: subtract image C from the original image A to obtain image D, then multiply the image D by a corresponding coefficient 8 to obtain image E. The image E can be the image in Fig.1(b) or the image in Fig.2(b). The grayscale of the grayscale image ranges from 0 to 255, if the grayscale value of a certain pixel of image C exceeds 255 after multiplying by 8, the grayscale value of the pixel is taken to be 255.
5) confirmation step: calculate a variance of grayscale values of the target area based on image E to get a variance value Z; if the variance value Z is within the range of 49<Z<73, judge that the number and type of materials placed inside a packaging box are correct, thus determining the packaging box is qualified; if the variance value Z is not within the range of 49<Z<73, judge that the number and type of materials placed inside a packaging box are incorrect, thus determining the packaging box is non-qualified and rejected out of the packaging production line.

In this embodiment, the variance of the grayscale image in FIG 1(b) is 44.8119, the variance of the grayscale image in FIG 2(b) is 87.2330, and their variance values Z are not in the range of 49<Z<73, and they are unqualified, and the packaging apparatus rejects them from the packaging production line, while the variance of the grayscale image in FIG 3(b) is 63.4496, and the variance value Z is in the range of 49<Z<73 and it is qualified.

### Embodiment 5: The effect of the placing direction of one or more materials in a packaging box on the determination result

In this embodiment, it is allowed for a swab to be placed inside a packaging box in its front side or in its back side facing up. Whether the swab is placed with its front side or its back side facing up, the packaging box is determined to be qualified. However, since one side of the outer packaging of the swab is made of paper, it is not easy to reflect light under illumination, while the other side of the outer packaging of the swab is made of plastic and is prone to reflection under illumination.

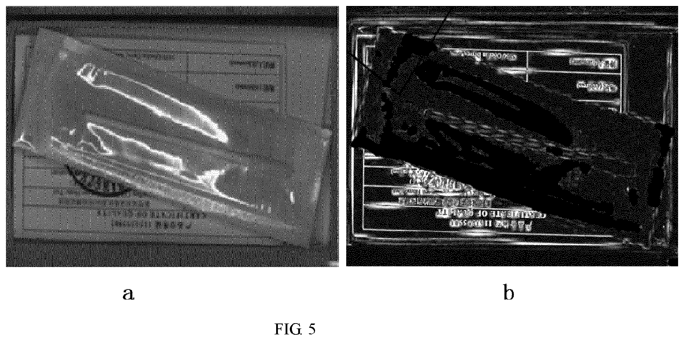

As shown in FIG 3, a swab in a packaging box is placed with the paper side facing up, and in FIG 5, a swab in a packaging box is placed with the paper side facing down and the plastic side facing up, the light irradiation produces obvious reflection on the plastic side. After the placement is completed, a grayscale image of the inside of the packaging box is obtained, such as the image in FIG 3(a) and the image in FIG 5(a). The images are then processed using Method II of the present invention, respectively, and the variance of the grayscale image of FIG 3(b) is obtained to be 63.4496, and the variance of the grayscale image of FIG 5(b) is obtained to be 58.3440.

The method of processing any of the image in FIG 3(a) and the image in FIG 5(a) in this embodiment specifically includes:
1) original image acquisition step: obtain a grayscale image of a material placement region inside the packaging box, such as the image in FIG 3(a) or the image in FIG 5(a), select the entire area of the image as a target area to be analyzed, and obtain a grayscale image of the entire area as the original image A.
2) a step for judging and processing a highlighted area: the original image A is binarized and a threshold value is set to 180, then the grayscale value of the binarized original image is compared with the threshold value, if the grayscale value of the binarized original image A is less than the threshold value 180, the original image is judged not to have a highlighted area and the binarized original image is completely dark, Fig. 3 is such a situation, and no expansion is required; if a grayscale value of a portion of the binarized original image A is greater than the threshold value 180, then the portion is a highlighted area F, Fig. 5 is such a situation and the highlighted area F obtained after the binarization of original image A is expanded to get an area F+. In this embodiment, the area F undergoes circular expansion of 10 pixel kernel sizes to obtain the area F+. A fixed grayscale value such as 10 is assigned to the pixels within the area F+, and this image is taken as the original image A to enter step 3).
3) image reduction step: reduce the original image A proportionally to obtain a reduced image B. That is, the original image A is reduced to one-tenth of the width and one-tenth of the height of the original image A to get the smaller-sized grayscale image B. In this embodiment, the original image A is 1020*500 pixels, and the image B is 102*50 pixels.
4) image enlargement step: enlarge the image B to the size of the original image A, and obtain image C of the same size as the original image A. That is, image B is enlarged to the size of the original image, to get the same size as the original image C. In this embodiment, the original image A is 1020 * 500 pixels, and image C is also 1020 * 500 pixels.
5) image processing step: subtract image C from the original image A to obtain image D, then multiply the image D by a corresponding coefficient 8 to obtain image E, which is the image in Fig. 3(b) and image in Fig. 5(b), respectively. The grayscale of a grayscale image ranges from 0 to 255, if the grayscale value of a certain pixel of image C exceeds 255 after multiplying by 8, the grayscale value of the pixel is taken to be 255.
6) confirmation step: calculate the variance of grayscale values of the target area based on the image E to get a variance value Z; if the variance value Z is greater than 55, determine that a swab is placed inside in the packaging box, thus determining the packaging box is qualified; if the variance value Z is less than 55, determine that a swab is not placed inside the packaging box, thus determining the packaging box is non-qualified, so the packaging apparatus rejects the packaging box from the packaging production line.

In another processing step of any of the image in FIG 3(a) and the image in FIG 5(a), the step of "a fixed grayscale value such as 10 is assigned to the pixels within the area F+" in step 2) can also be chosen to be carried out in step 5), i.e., in step 5) the image processing step: subtract image C from the original image A to obtain image D, multiply the image D by a corresponding coefficient of 8 to obtain image E (the image in the Fig. 3(b) or in the Fig. 5(b)), then a fixed grayscale value such as 10 is assigned to the pixels within the area F+ of the image E. The grayscale of the grayscale image ranges from 0 to 255, if the grayscale value of a certain pixel of image C exceeds 255 after multiplying by 8, the grayscale value of the pixel is taken to be 255.

In this embodiment, the variance of the grayscale image in FIG 3(b) is 63.4496, and the variance value Z is greater than 55, and the packaging box has contained a swab, and the variance of the grayscale image in FIG 5(b) is 58.3440, and the variance value Z is greater than 55, and the packaging box likewise also has contained a swab. Thus when the packaging method of the present invention is used, even if the swab produces a large reflection under the light irradiation, it will not affect the packaging apparatus to make a correct determination.

## Claims

1. A method for detecting the material placement condition in a packaging box, **characterized in that** the method comprises the following steps:
1) original image acquisition step: obtain a grayscale image of a material placement region inside the packaging box, select a target area to be analyzed, and obtain a grayscale image of the target area as an original image A;
2) image reduction step: reduce the original image A in step 1) proportionally to obtain image B;
3) image enlargement step: enlarge the image B in step 2) to the size of the original image A to obtain image C of the same size as the original image A;
4) image processing step: subtract the image C from the original image A to obtain image D, then multiply the image D by a corresponding coefficient or multiply image D by a corresponding coefficient plus a certain value to obtain image E;
5) confirmation step: calculate a variance of grayscale values of the target area based on the image E to get a variance value Z; if the variance value Z is within the set interval range, judge that one or more materials in the packaging box comply with the packaging requirements; if the variance value Z is not within the set interval range, judge that said one or more materials in the packaging box do not comply with the packaging requirements.

2. The method of claim 1, wherein step 1) also includes a step of binarization of the original image A, comparing the binarized image with a threshold value, and if the grayscale value of the binarized image is less than the threshold value, judging that there is no highlighted area in the original image A, and proceeding to step 2); if a portion of the binarized image has a grayscale value greater than the threshold value, there exists a highlighted area, and it is necessary to binarize the original image A to obtain the highlighted area F, then the area F is expanded to obtain an area F+, and a value is assigned to F+.

3. The method of claim 2, wherein one of the following processing methods is selected for assigning a value to the area F+: assigning a fixed grayscale value to the pixels in the area F+ of the image E in step 1), and taking the image as the original image A to enter step 2), or assigning a fixed grayscale value to the pixels in the area F+ of the image E in step 4), and then entering step 5).

4. The method of claim 3, wherein said value assigned to the pixels in the area F+ is 0 or a low brightness value.

5. The method of claim 1, wherein in step 4), the image D is multiplied by a corresponding coefficient or the image D is multiplied by a corresponding coefficient plus a certain value, and if the grayscale value of the pixels in the image D exceeds 255 after the calculation, the grayscale value of the pixels is taken to be 255.

6. The method of claim 1, wherein said corresponding coefficient in step 4) is a value greater than 0, and said certain value is a positive or negative number.
